# EUROPÄISCHE PATENTANMELDUNG

(11) **EP 1 191 255 A1**
(43) Veröffentlichungstag der Anmeldung: **27.03.2002**
(21) Anmeldenummer: 01810882.9
(22) Anmeldetag: 12.09.2001
(51) Int. Cl.: F16H 3/72, B25B 23/14

(54) **Steuerbares Planetengetriebe**

(30) Priorität: 25.09.2000 DE 10047312
(71) Anmelder: HILTI Aktiengesellschaft, 9494 Schaan (LI)
(72) Erfinder: Wissmach, Walter, 80637 München (DE); Kristen, Ferdinand, 82205 Gilching (DE); Schweitzer, Edwin, 9496 Balzers (LI); Mergenbaum, Michael, 6800 Feldkirch (AT)
(74) Vertreter: Wildi, Roland

(57) **Zusammenfassung**

Ein steuerbares Planetengetriebe (1) zur Übertragung einer Drehbewegung mit einer zwischen einem Antrieb (2) und einem Abtrieb (3) über ein Hohlrad (4) steuerbaren Drehzahländerung, welches in den rotierbaren Innenteil (5, 5') eines Steuermittels (6, 6') integriert ist, dessen drehfest bezüglich eines Gehäuses (9) gelagerter Aussenteil (7, 7') zumindest einen Sensor (8) zur Messung der Kraft oder der Dehnung aufweist, verschachtelt mehrere ineinander integrierte Bauteile.

## Beschreibung

Die Erfindung betrifft ein steuerbares Planetengetriebe insbesondere für über einen rotierenden Antrieb betriebene Handwerkzeuggeräte wie Bohrmaschinen, Bohrhämmer, Meisselhämmer etc.

Planetengetriebe bestehen bspw. aus einem innenverzahnten Hohlrad, einem dazu koaxialen aussenverzahnten inneren Sonnenrad und zumeist zwei oder mehr im dazwischen ausgebildeten Ringraum umlaufende, in beide Verzahnungen eingreifende, aussenverzahnte Planetenräder, deren koaxial umlaufende Drehpunkte optional in einem koaxialen Planetenträger gelagert sind.

Aus den vielfältigen Anwendungsgebieten der Planetengetriebe beschränkt sich diese Erfindung auf eine Übertragung einer Drehbewegung mit einer steuerbaren Drehzahländerung zwischen einem Antrieb und einem Abtrieb. Neben jeweils einem frei gewählten Antrieb und Abtrieb steht somit jeweils stets ein weiterer Freiheitsgrad zur Verfügung, welcher zur Steuerung des Übertragungsverhaltens benutzt werden kann.

Bezüglich des Antriebs und Abtriebs beschränkt sich diese Erfindung auf eine diesbezügliche Verwendung des inneren Sonnenrades und des Planetenträgers, wodurch das Hohlrad der Steuerung zur Verfügung steht.

Nach der US4828049 wird in einer Handbohrmaschine ein Planetengetriebe zur Reduzierung der Drehzahl benutzt, wobei zum Antrieb das Sonnenrad und zum Abtrieb der Planetenträger verwendet wird. Das Hohlrad ist immer drehfest im Gehäuse fixiert und steuert somit das Planetengetriebe nicht.

Nach der US4231270 wird ein Planetengetriebe für ein Handschraubwerkzeug, wobei zum Antrieb das Sonnenrad und zum Abtrieb der Planetenträger verwendet wird, zusätzlich als durch den axialen Anpressdruck manuell betätigbare Kupplung benutzt, über welche der Kraftfluss vom Motor zur Arbeitsspindel trennbar ist. Im eingekuppelten Zustand ist das steuernde, axial versetzbare, äussere Hohlrad formschlüssig drehfest mit dem Gehäuse des Handschraubwerkzeuges verbunden. Optional unterbricht ein mit dem Hohlrad und dem Gehäuse axial verbundener Mikroschalter im entkuppelten Zustand die Stromversorgung für den Elektromotor.

Nach der EP0212381 ist ein Planetengetriebe einer Handbohrmaschine, wobei zum Antrieb das Sonnenrad und zum Abtrieb der Planetenträger verwendet wird, mit einer Rutschkupplung kombiniert, welche federnd vorgespannt zwischen dem steuernden Hohlrad des Planetengetriebes und der drehfesten Lagerung im Gehäuse angeordnet ist.

Nach der US5076120 beinhaltet ein Handbohrschrauber ein Planetengetriebe, wobei zum Antrieb das Sonnenrad und zum Abtrieb der Planetenträger verwendet wird, dessen Hohlrad fest mit dem Gehäuse verbunden ist und axial versetzt zusätzlich eine elektromagnetische Kupplung aufweist.

Nach der DE4344817 beinhaltet ein Bohrhammer eine Sicherheitsschaltungen gegen Werkzeugblockaden, welche bei den Nutzer gefährdenden plötzlichen Werkzeugblockaden zumindest teilweise drehender Werkzeuge eine elektromagnetische Sicherheitskupplung zur sofortigen elektronisch gesteuerten Trennung des Elektromotors vom Getriebe ansteuert, bevor der bei unterbrochener Energiezufuhr auf Grund seiner Rotationsenergie lange nachlaufende Elektromotor ausgelaufen ist. Dazu wird bspw. über Sensoren das Drehmoment gemessen. Diese Sicherheitskupplung benötigt als zusätzliches Bauteil mehr axialen Gehäuseinnenraum und verursacht zusätzliche Kosten.

Nach der JP58127137 wird bei einem Planetengetriebe zur Messung des Drehmoments die zur drehfesten Lagerung des Hohlrades im Gehäuse benötigte Lagerreaktionskraft gemessen.

Die Aufgabe der Erfindung besteht in einer Anordnung mit minimaler Anzahl von Bauteilen zur Steuerung eines zur Übertragung einer Drehbewegung zwischen einem Antrieb und einem Abtrieb verwendeten Planetengetriebes mit einer als Funktion des Drehmoments steuerbaren Drehzahländerung. Ein weiterer Aspekt der Erfindung besteht in der Verkürzung des dazu benötigten axialen Wellenbereiches, insbesondere bei einer Verwendung in Handwerkzeuggeräten mit Sicherheitsschaltungen gegen Werkzeugblockaden zumindest teilweise drehender Werkzeuge.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird bei einem Planetengetriebe zur Übertragung einer Drehbewegung mit einer zwischen einem Antrieb und einem Abtrieb über das Hohlrad steuerbaren Drehzahländerung, dieses in den rotierbaren Innenteil eines Steuermittels integriert, dessen drehfester Aussenteil Sensoren zur Messung der Kraft oder der Dehnung aufweist und bezüglich des Gehäuses drehfest gelagert ist.

Somit wird die Lagerreaktionskraft im Aussenteil des im Gehäuse gelagerten Steuermittels gemessen, welche dem Drehmoment im Antrieb bzw. Abtrieb des über das Steuermittel gesteuerten Planetengetriebes direkt proportional ist.

Sowohl die Messung als auch die Steuerung des Drehmoments über die Drehzahländerung des Planetengetriebes erfolgt über das Aussenteil des Steuermittels.

Vorteilhaft ausgeführt ist das Steuermittel als kontinuierlich reibkraftschlüssige Bremse mit steuerbar beweglichen Reibmitteln bspw. mit einer sektorseitig wirkenden Bremsscheibe oder einem umfänglich wirkenden Bremsband, oder als diskret haftreibkraftschlüssige Rutschkupplung mit federnd vorgespannten Haftmitteln oder als drehformschlüssige Sicherheitskupplung mit einem beweglichen Auslösemechanismus bspw. einer Klinke.

Das Steuermittel ist vorteilhaft mechanisch einstellbar ausgeführt, bspw. als per Hand von Aussen zugängliche versetzbare Stellglieder oder Vorspannfedern.

Das Steuermittel ist vorteilhaft elektrisch verstellbar ausgeführt, bspw. als elektrische Betätigungsmittel elektromagnetisch schaltbar oder vorspannbar, indem weiter vorteilhaft die Wicklung drehfest mit dem Aussenteil verbunden und das Innenteil aus ferromagnetischem Material ausgeführt ist.

Vorteilhaft erfolgt die Steuerung der Betätigungsmittel elektronisch von Innen über einen im Gehäuse beinhalteten Mikrocontroller, welcher weiter vorteilhaft den im Aussenteil angeordneten Sensor zur Messung des Drehmoments auswertet.

Vorteilhaft ist das Steuermittel selbst kombiniert ausgeführt, indem das, das innenverzahnte Hohlrad ausbildende, Innenteil mit einem, dieses umfänglich umgebenden, Zwischenteil sowohl äusserer Bestandteil der Rutschkupplung als auch innerer Bestandteil eines weiteren Steuermittels mit dem Aussenteil ist, bspw. einer Sicherheitskupplung.

Vorteilhaft ist das Aussenteil stirnseitig zu dem Zwischenteil angeordnet, wobei weiter vorteilhaft das Zwischenteil axial versetzbar ist.

Weiter vorteilhaft ist das Innenteil und das Zwischenteil und/oder das Aussenteil des Steuermittels in einem gemeinsamen axialen Bereich und somit radial ineinander verschachtelt angeordnet.

Vorteilhaft ist das steuerbare Planetengetriebe in einem zumindest teilweise drehenden Handwerkzeuggerät zur Übertragung einer Drehbewegung beinhaltet.

Weiter vorteilhaft weist ein, eine Schutzschaltung gegen übermässiges Verdrehen des Gehäuses aufweisendes, Handwerkzeuggerät eine sowohl mit dem Sensor des Aussenteils als auch mit zumindest einem Steuerteil verbundenen Mikrocontroller auf, wobei vorteilhaft dieses Steuerteil als elektrisch betätigbare Sicherheitskupplung ausgeführt ist, welche bei einer Werkzeugblockade die Übertragung der Drehbewegung vom Motor am Antrieb des Planetengetriebes zur Werkzeugspindel am Abtrieb des Planetengetriebes unterbricht, indem durch die Sicherheitskupplung die drehfeste Arretierung des, das Hohlrad des Planetengetriebes integriert beinhaltende, Innenteils zu dem am Gehäuse drehfest befestigten Aussenteil geöffnet wird, wodurch sich das Innenrad frei drehen kann.

Vorteilhaft ist das kombiniert, mit dem Innenteil und dem Zwischenteil eine Rutschkupplung und mit dem Zwischenteil und dem Aussenteil eine elektromagnetische Sicherheitskupplung ausbildend, ausgeführte Steuermittel in einem gemeinsamen axialen Bereich radial ineinander verschachtelt angeordnet, wodurch die Anzahl der Bauteile, der Raumbedarf, die Masse und die Herstellungskosten vermindert werden.

Die Erfindung wird bezüglich eines vorteilhaften Ausführungsbeispiels näher erläutert mit:
Fig. 1 als steuerbares Planetengetriebe im schematischen Längsschnitt
Fig. 2 als steuerbares Planetengetriebe in schematischer Stirnansicht
Fig. 3 als Handwerkzeuggerät mit integriertem, schematisch angedeutem Planetengetriebe

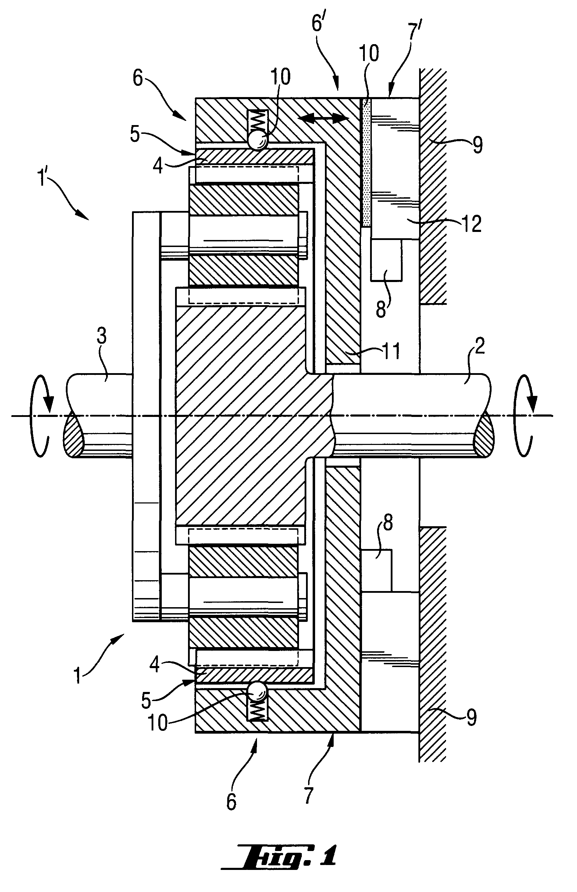

Nach Fig. 1 ist bei einem Planetengetriebe 1 zur Übertragung einer Drehbewegung mit einer zwischen einem Antrieb 2 an einem Sonnenrad und einem Abtrieb 3 an einem Planetenträger über ein innenverzahntes Hohlrad 4 steuerbaren Drehzahländerung, wie im unteren Teilbild dargestellt, das Hohlrad 4 in einen rotierbaren Innenteil 5 eines Steuermittels 6 integriert, dessen drehfester Aussenteil 7 einen Sensor 8 zur Messung der Kraft in Form eines Piezosensors oder der Dehnung in Form von Dehnmessstreifen aufweist und bezüglich eines Gehäuses 9 drehfest gelagert ist. Das Steuermittel 6 bildet zwischen dem Innenteil 5 und dem Aussenteil 7 eine die Drehbewegung des Hohlrades 4 steuerndes Kontaktelement 10 in Form einer haftreibungsschlüssigen Rutschkupplung mit federnd vorgespannten Kugeln aus. Das Planetengetriebe 1 ist mit dem Steuermittel 6 zumindest teilweise radial in einem gemeinsamen axialen Bereich verschachtelt.

Mit einem drehbaren Zwischenteil 11 aus Eisen, welches zwischen dem Innenteil 5 und einer innerhalb des Aussenteils 7 des Steuermittels 6 gehäuseseitig drehfest angeordnetes Betätigungsmittel 12 in Form einer leitfähigen Wicklung geringfügig axial versetzbar angeordnet ist, wird, wie im oberen Teilbild dargestellt, mit einem stirnseitig angeordneten Kontaktelement 10' in Form eines gleitreibungsschlüssigen beidseitigen Bremsbelages ein Steuermittel 6' in Form einer elektromagnetischen Sicherheitskupplung bezüglich des Planetengetriebes 1' mit dem, das Hohlrad 4 integrierenden, Innenteil 5' und dem am Gehäuse 9 drehfest befestigten Aussenteil 7' mit dem Sensor 8 ausgebildet. Durch die Kombination des radial aussen angeordneten Kontaktelement 10 mit dem axial stirnseitig angeordneten Kontaktelement 10' ist auf sehr kleinem Raum eine voneinander entkoppelte Anordnung von zwei ineinander integrierten Steuermitteln 6, 6' möglich.

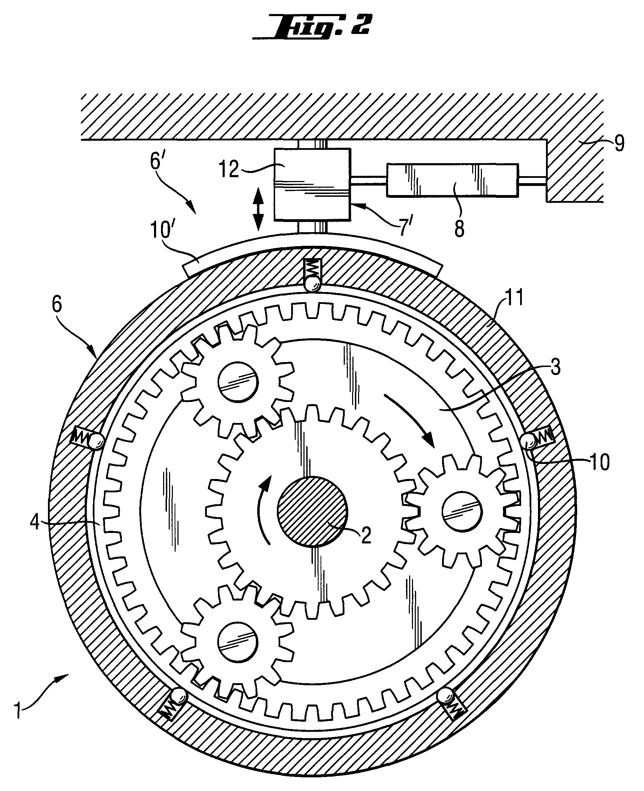

Nach Fig. 2 ist bei dem Planetengetriebe 1 zur steuerbaren Drehzahländerung mit dem Hohlrad 4 das Steuermittels 6' in Form einer das vom Planetengetriebe 1 übertragene Drehmoment kontinuierlich ändernden Bremse ausgeführt, dessen drehfester Aussenteil 7' den Sensor 8 aufweist und bezüglich des Gehäuses 9 drehfest gelagert ist. Das Betätigungsmittel 12 verbindet das Kontaktmittel 10' in Form einer sektorseitig bremsenden kreisbogenförmigen Bremsplatte mit dem Gehäuse 9. Getrennt über ein Zwischenteil 11 ist ein weiteres Steuermittel 6 ist mit Kontaktelementen 10 in Form einer haftreibungsschlüssigen Rutschkupplung mit federnd vorgespannten Kugeln ausgeführt.

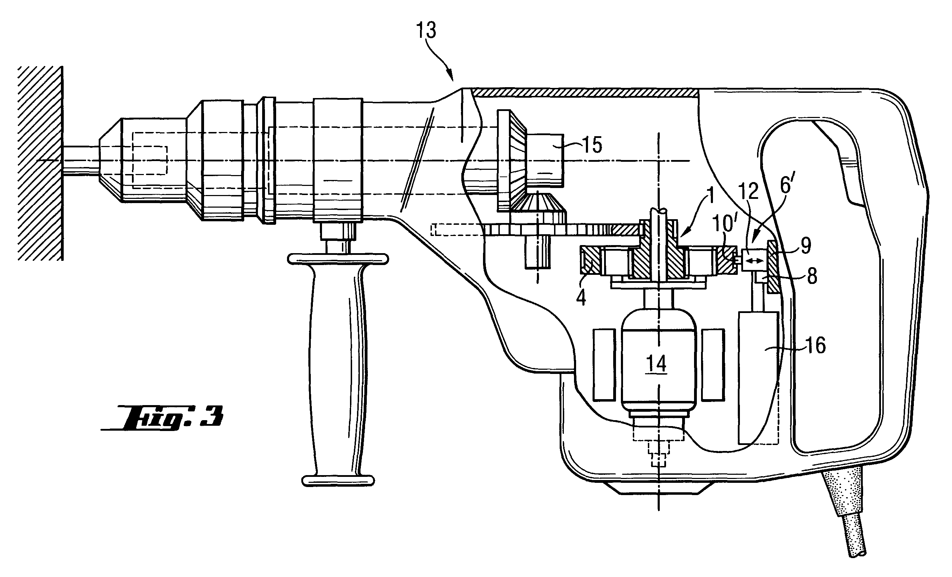

Nach Fig. 3 weist ein Handwerkzeuggerät 13 zwischen einem Motor 14 und einer Werkzeugspindel 15 für ein zumindest teilweise drehendes Werkzeug das Planetengetriebe 1 auf, dessen steuerndes innenverzahntes Hohlrad 4 im selben axialen Bereich mit einem Steuermittel 6' in Form einer Sicherheitskupplung radial verschachtelt ist, welches mit einem Kontaktelement 10' in Form eines radial beweglichen formschlüssigen Arretierelementes über das Betätigungsmittel 12 in Form eines Magnetschalters mit dem Gehäuse 9 steuerbar drehfest verbunden ist. Zur Messung der Lagerreaktionskraft des Hohlrades 4 des Planetengetriebe 1 ist am Betätigungsmechanismus 12 drehfest zum Gehäuse 9 der Sensor 8 angeordnet, welcher mit einem Mikrocontroller 16 messbar verbunden ist, welcher aus dem Messwert des Sensors 8 eine Winkelbeschleunigung berechnet und bei Überschreitung eines Grenzwertes über das steuerbar verbundene Betätigungsmittel 12 das Kontaktelement 10' entarretiert und somit das Hohlrad 4 frei drehbar ist, wodurch keine Drehbewegung vom Motor 14 auf die Werkzeugspindel 15 übertragen wird.

## Patentansprüche

1. Steuerbares Planetengetriebe zur Übertragung einer Drehbewegung mit einer zwischen einem Antrieb (2) und einem Abtrieb (3) über ein Hohlrad (4) steuerbaren Drehzahländerung, **dadurch gekennzeichnet, dass** das Hohlrad (4) in den rotierbaren Innenteil (5, 5') eines Steuermittels (6, 6') integriert ist, dessen drehfest bezüglich eines Gehäuses (9) gelagerter Aussenteil (7, 7') zumindest einen Sensor (8) zur Messung der Kraft oder der Dehnung aufweist.

2. Steuerbares Planetengetriebe nach Anspruch 1, **dadurch gekennzeichnet, dass** das Steuermittel (6, 6') als kontinuierlich reibkraftschlüssige Bremse mit steuerbar beweglichen Reibmitteln oder als diskret haftreibkraftschlüssige Rutschkupplung mit federnd vorgespannten Haftmitteln oder als drehformschlüssige Sicherheitskupplung mit einem beweglichen Auslösemechanismus ausgeführt ist.

3. Steuerbares Planetengetriebe nach Anspruch 1 oder Anspruch 2, **dadurch gekennzeichnet, dass** das Steuermittel (6, 6') über Betätigungsmittel (12) mechanisch oder elektrisch einstellbar ausgeführt ist.

4. Steuerbares Planetengetriebe nach Anspruch 3, **dadurch gekennzeichnet, dass** das Betätigungsmittel (12) elektromagnetisch ausgeführt ist.

5. Steuerbares Planetengetriebe nach einem der vorherigen Ansprüche, **dadurch gekennzeichnet, dass** die Steuerung des Betätigungsmittels (12) elektronisch von einem Mikrocontroller (16) erfolgt.

6. Steuerbares Planetengetriebe nach Anspruch 5, **dadurch gekennzeichnet, dass** der Mikrocontroller (16) mit dem im Aussenteil (7, 7') angeordneten Sensor (8) verbunden ist.

7. Steuerbares Planetengetriebe nach einem der vorherigen Ansprüche, **dadurch gekennzeichnet, dass** mit einen zwischen dem Innenteil (5) und dem Aussenteil (7') angeordneten Zwischenteil (11) zwei kombinierte Steuermittel (6, 6') ineinander integriert ausgeführt ist.

8. Steuerbares Planetengetriebe nach Anspruch 7, **dadurch gekennzeichnet, dass** das Aussenteil (7') stirnseitig zu einem axial versetzbaren Zwischenteil (11) angeordnet ist.

9. Steuerbares Planetengetriebe nach Anspruch 7, **dadurch gekennzeichnet, dass** das Innenteil (5) und das Zwischenteil (11) und/oder das Aussenteil (7, 7') in einem gemeinsamen axialen Bereich radial ineinander verschachtelt angeordnet ist.

10. Steuerbares Planetengetriebe nach einem der vorherigen Ansprüche, **dadurch gekennzeichnet, dass** es zwischen einem Motor (14) und einer Werkzeugspindel (15) in einem zumindest teilweise drehenden Handwerkzeuggerät (13) zur Übertragung einer Drehbewegung angeordnet ist.
